Europäisches Patentamt

European Patent Office

Office européen des brevets

(19)

(11)     EP 0 747 124 A1

(12)     EUROPEAN PATENT APPLICATION

(43) Date of publication:
      11.12.1996  Bulletin 1996/50

(51) Int. Cl.$^6$: **B01J 35/04**, B01D 53/94

(21) Application number: 95108742.8

(22) Date of filing: 07.06.1995

(84) Designated Contracting States:
     **DE FR GB IT SE**

(71) Applicant: **ULTRAMET**
     **Pacoima, California 91331 (US)**

(72) Inventors:
     • **Fay, Thomas F., III**
       **Fair Oaks, California 95628 (US)**
     • **Ferla, Raffaele La**
       **Hermosa Beach, California 90254 (US)**

• **Sherman, Andrew J.**
  **Granada Hills, California 91344 (US)**
• **Stankiewicz, Edwin P.**
  **Sherman Oaks, California 91403 (US)**

(74) Representative: **Grünecker, Kinkeldey,**
     **Stockmair & Schwanhäusser**
     **Anwaltssozietät**
     **Maximilianstrasse 58**
     **80538 München (DE)**

(54)     **Foam catalyst support for exhaust purification**

(57)     A method of producing an acoustic baffle/catalyst foam support material and the resultant material. A polyurethane open cell foam material is provided having a density between 10-100ppi. The polyurethane foam is infiltrated with a resin material to produce an impregnated foam. The impregnated foam is pyrolized to form a carbon skeleton forming a carbon foam. The carbon foam skeleton is coated with one or more of the following group of materials to a relative density of five to thirty five (5-35) percent, the group of materials being SiC, Si3N4, MoSi2 or high temperature metal.

```
            INFILTRATE
              FOAM        10
            WITH RESIN

  14

COMPRESS        PYROLIZE     12
  FOAM        FOAM / RESIN

 OPTIONAL

              MACHINE        16
            CARBON FOAM

             CDV / CVI
            CARBON FOAM
            WITH SURFACE     18
              COATING

              ACTIVE         20
               FOAM
             LIGAMENT

 OPTIONAL   APPLY / IMPREGNATE  22
            SURFACE COATING
             OF CATALIST

              ACTIVATE
              CATALYTIC      24
              ACTIVITY

         FOR FURTHER FABRICATION
```

Fig. 1

## Description

### BACKGROUND OF THE INVENTION

Recent EPA mandates are now placing more stringent controls on emissions from various sources, including diesel engines and small 2- and 4-cycle engines such as lawnmower, weedeater, chainsaw, and motorcycle engines.

Because of its low manufacturing costs and simplified operating details, the two-cycle engine is favored for small, low-cost engine applications. However, because the exhaust ports remain open for a time after the intake ports are blocked, and due to mixing of the clearance and combustion gases, a finite amount of combustible gases are vented without undergoing any reaction. Analysis of the exhaust indicates that the majority of hydrocarbon emissions are due to direct fuel loss. The bulk of CO emissions arise from incomplete burning of the fuel charge, due to rich operating conditions and low volumetric efficiency. Similar exhaust characteristics occur in side-valve 4-stroke engines.

Because of their operating conditions and minimal maintenance, aftertreatment and engine modifications for two-cycle and side-valve engines must take into account such factors as large load and speed range requirements, heavy vibration, frequent on-off operations, and multipositional operating characteristics. In addition, due to the fuel/oil, mixture ratio required for operation of two-stroke and heavy hydrocarbon emissions in low-cost 4-strokes, any modifications must be insensitive to misfueling, backfiring through the exhaust port, and contaminants in the oil (such as mercaptans containing sulfur, etc.). Also, any engine modifications/converter control options must require minimum or zero maintenance and not introduce any potential safety problems (such as excessive surface or exhaust temperature).

Numerous methods have been utilized in the past to reduce emissions. These emissions control technologies generally fall into two categories: engine modifications and exhaust aftertreatment. The first method utilizes modifications of the engine cycle to achieve more efficient and complete combustion of the fuel and is primarily focused on control of the combustion process. Engine modifications include control of the air/fuel mixture ratio, air/fuel/clearance gas mixing, and combustion process/timing to achieve a more efficient, complete, and uniform combustion process. Exhaust aftertreatment consists of transforming the remaining pollutants into less harmful compounds and can be catalytic or thermal.

A catalyzed exhaust aftertreatment system is the lowest in cost and performance impact and is the most easily implemented emission control option for small two-stroke (and four-stroke) utility engines. Studies have shown this type of system to be capable of reducing emissions to extremely low levels. Aftertreatment utilizes a catalytic surface to enhance the combustion of hydrogen, hydrocarbons, and CO. With the design of the present invention, the catalyst system also traps and combusts organic particulate matter and can be used to raise exhaust gas temperature to allow thermal reactions to complete pollutant conversion.

The major problems in catalytic converters for two-cycle engines arise primarily from the extreme levels of unreacted fuel and CO in two-cycle engine exhaust, which lead to excessive heat release. This heat release, combined with the close proximity to the engine cylinder creates excessive temperatures, which in turn cause degradation of the catalyst/support as well as presenting fire and burn hazards. Other less obvious but significant problems arise from the high-temperature poisoning effect on the catalyst/catalyst support system, the reduced residence times available (and therefore higher conversion kinetics required) in the small engine vs automotive engine, the presence of sulfur derived from the fuel and lubricating oils, and the substantially increased vibration and impact load durability required in the utility engine as compared to automotive applications.

Typical current generation automotive catalysts consist of a three-way catalyst (composed of a gamma-alumina washcoat impregnated with Pt-Ph catalysts) supported on a through-flow cordierite honeycomb substrate. This cordierite support is not adaptable to the small utility engine due to temperature and reaction kinetic concerns. Another substrate material that has been demonstrated is the use of wire meshes, screens, or expanded metal. However, these systems are too expensive for adaptation to small utility engines since complete converter systems can cost approximately $70-150.

The converter must carry out the following three chemical reactions:

$$CO + 1/2O_2 \rightarrow CO_2$$

$$C_nH_{(2n+2)} + 1/2(3n+1)O_2 \rightarrow nCO_2 + (n+1)H_2O$$

$$CO + NO \rightarrow N_2 + CO_2$$

Of these reactions, the reduction of NO to nitrogen is by far the most demanding. However, $NO_x$ reduction is not required to meet 1999 two-cycle emissions standards unless significant engine changes result in an increase in $NO_x$ emissions. The modern autocatalyst is supported on a cordierite honeycomb (cost of $7-14/unit) and comprises a suitable mixture of platinum, rhodium, and palladium metals supported on a thin, high-area alumina "washcoat". A typical automotive catalyst would utilize a 300 cell/in$^2$ cordierite monolith with 0.83 g of platinum applied as a ceria/alumina/platinum slurry having a density of 110 g of slurry/g of platinum. Some 60 μm of slurry is applied to the cordierite followed by drying and calcining at 500°C. Approximately 3-5 grams of Pt-group metals are required for each converter.

The two primary difficulties with (The use of an Automotive) a catalyst for two-cycle engines lies in the unsuitability of the washcoat and cordierite substrate to survive the excessive temperatures and thermal transients generated during oxidation of the high-energy exhaust mixture, so the low residence times obtained in such a through-flow geometry and the heavy vibrations encountered in a one-cylinder engine. At full throttle, complete conversion of the small engine exhaust products results in temperatures exceeding 1000°C. At high temperatures, three phenomena take place which "poison" the current catalyst/support materials.

First, at ≈900°C, the gamma- alumina used as a high surface area washcoat transforms into alpha-alumina, having less than 1/300 of the surface area. This condition can be alleviated by starting with an alpha-alumina washcoat, but this washcoat does not provide nearly the surface area of gamma-alumina.

Second, platinum, rhodium, and palladium migrate into the alumina lattice and become ineffective as the lattice is not exposed to the exhaust gases, and this effect is compounded by sintering in both the alumina and metallic phases.

Third, at elevated temperatures mobile species from the support (usually $SiO_2$) can diffuse over the surface of the metal or oxide catalyst, reducing the exposed surface area and poisoning the active surface sites. In addition to catalyst poisoning, cordierite becomes extremely soft at ≈1000°C and loses most of its mechanical properties, and due to the nature of a small engine develops "hot spots" and localized melting of the support. Substantial grain growth also occurs which leads to thermal "ratcheting" and eventual failure under cyclic operation.

In addition to their temperature limitations, current cordierite honeycomb supports are not available to cell sizes and geometries suitable for two-cycle exhaust systems. To achieve the desired residence times and surface activity in small muffler cans, finer cell sizes and higher strength supports will be required, in an alternate higher thermal conductivity material.

SUMMARY OF THE PRESENT INVENTION

Applicants have demonstrated that a foam support meets the requirements for a small utility engine catalytic converter, by providing both the high conversion efficiency, and temperature stability, mechanical and thermal properties required. Furthermore, this foam support can be manufactured at lower cost (approximately $3-3.50/unit) than either the extruded cordierite material or the metallic supports which are the alternatives.

Due to the temperature poisoning effects, either gas cooling through dilution air insertion (which is difficult to achieve into the interior) or alternate catalyst formulations must be utilized. The present invention includes substrate-independent catalysis using platinum group metal plating of various substrates which are not susceptible to temperature poisoning. A foam support plated with 80 mg of platinum was deemed suitable for exhaust conversion to 1999 levels. Testing of the same system for $O_2/H_2$ catalysis revealed no temperature degradation upon exposure to 1100°C. Other alternatives also modify the catalyst formulations to eliminate highly diffusive species and solubility, such as using a zirconia-based washcoat to provide the required high surface area.

The catalyst system of the present invention has several unique features offering advantages over current autocatalyst formulations. First, utilization of a ceramic or metallic foam substrate, as opposed to a honeycomb structure, provides much greater surface contact and mixing at equivalent or reduced pressure drops and greatly reduced catalyst dimensions. Because of the much higher surface area of foam substrates, it is not necessary to utilize a high surface area washcoat to achieve the desired conversion efficiencies. If a higher surface area is desired, surface texturing of the foam surface can provide a 10-100x enhancement in surface area. The present invention provides a 10-100x enhanced catalytic efficiency using foams, mainly due to the greater exposure of catalytic surface to gas (i.e. the catalyst is located solely on the support surface, not imbedded in a washcoat).

The present invention is capable of extended high temperature operation (compared to the gamma alumina wash which undergoes a phase change at roughly 850C) and cordierite substrates which are limited to 950°C. The invention also provides for both exhaust conversion and sound suppression in the same unit. In addition, the present invention is capable of surviving high vibration, temperature cycling, high temperature excursion, dirty fuels (oil additives in 2 cycle engines) without degradation in mechanical or chemical (activity) properties, i.e. does not poison readily, and presents high active surface area without excessive pressure drop. The present invention can be cooled to acceptable temperatures or used in conjunction with thermal oxidation for a lower-cost, lower back pressure system.

The core of the system is based on a reticulated foam catalyst support consisting of a non-oxide silicon based compound such as SiC, Si3N4, or MoSi2. The foam can be fabricated by coating a carbonized polyurethane foam using chemical vapor deposition or infiltration. This foam catalyst support provides high surface area for catalysis as well as sound suppression with low backpressure. To provide catalysis, the reticulated foam support must be coated with an oxidative catalyst consisting of platinum group metals (Pt, Pd, Ir, Rh, or Os). For Nox reduction (not required in small engines) a reducing catalyst is required and must be added. The catalyst can be coated directly onto the foam or for lower temperature operation and a washcoat may be used. By coating the foam with a dendritic or porous surface coating using modified fabrication procedures, a significant increase in active surface area can be obtained without affecting backpressure or requiring a separate washcoat.

For lower temperature operation, the foam catalyst support can be activated by using a standard washcoat applied after foam activation (to allow wetting). Activation of the foam can be accomplished via either preoxidation (to provide a thin SiO2 layer, or through vapor plating with an oxide (such as A1203, ZrO2, TiO2, or other oxide). However, aqueous plating of the catalyst and washcoat results in unacceptable thermal poisoning characteristics for operation. The present invention eliminates the drawbacks of current state-of-the-art catalyst/support systems and consists of the following specifics:

A catalyst support consisting of an open-cell reticulated, non-oxide foam fabricated by means of chemical vapor deposition or infiltration. The foam support also acts as a bulk acoustic absorber for providing noise reduction.

A platinum group metal catalyst applied as a thin film which coats the ligament surfaces, applied by organometallic chemical vapor deposition, typically from decomposition of an acetylacetonate compound. The catalyst may also be applied by aqueous plating or fused salt electrolysis, and may utilize a surface preparation technique to control interaction with the non-oxide foam substrate, or to increase foam surface area.

The foam catalyst support/acoustic baffle is fabricated through the following procedure:

1-    infiltrate 10-100 ppi polyurethane foam with resin

2-    pyrolize foam/resin to 600-1200 C to convert to carbon. resulting structure is an open cell porous carbon foam which forms the skeleton for further processing

2a-   during the crosslinking/pyrolization step the foam may be compressed in 1-3 dimensions to form a 150-1000ppi carbon foam

3-    Machining final shape from carbon foam to conform to final catalyst support/sound baffle dimensions (minus further coating dimensional change).

4-    Using chemical vapor deposition/infiltration (CVD/CVI), coat carbon foam skeleton with surface coating of a metal, SiC, Si3N4 or MoSi2 to the desired thickness. (governed by strength, heat capacity, etc. requirements). Typical final useful densities are from 5-35% metal or ceramic (65-95% open porosity).

5-    (optional) activate foam ligament surface through the application of a porous or dendritic coating (Via CVD/CVI), diffusion barrier, or oxide coating (using solgel, CVI, or standard washcoat application). May include surface activation (thermal oxidation)

6-    Apply/impregnate foam support with surface coating of precious metal catalyst using organometallic CVD, aqueous plating, or fused salt electrolysis.

7-    activate catalytic activity (such as 900-1000C treatment in H2).

This foam catalyst/baffle structure then forms the basis for a small engine muffler/exhaust system. Using the foam as a baffle material, 10-40db sound level reduction is obtained with a single baffle with low back pressure, or by lining the acoustic cavity with the foam (zero back pressure). Using two porous foam baffles separated by the proper distance (to provide a certain amount of acoustic resonance) can double the sound suppression level obtained. Modifying the foam geometry to a conical shape (or including conical shaped impressions) allows the same sound suppression levels to be obtained but with reduced backpressure. This type of arrangement is suitable for exhaust sound suppression for a variety of applications (motorcycles, high performance automobiles, chain saws, lawnmowers, weedwackers, etc.), using the foam as a duct-lining can allow noise reduction without affecting back pressure since no flow restriction is developed.

Using the catalyzed foam, emissions levels are simultaneously reduced along with engine noise levels. Again, the ceramic coated carbon foam forms the system core. This coated foam is then further coated with an activation layer and a precious metal catalyst (or combination catalyst). The foam is assembled into a metal can forming the muffler/catalytic converter body. Gas directors may be inserted into the foam to control the exhaust gas path and increase the exhaust gas residence time and a second thermal stage added to increase converter performance. For insulation and packaging (to reduce dimensional tolerance levels, provide for CTE differences and load transfer to survive vibrational loading and provide packing material) a fibrous insulation material (such as Interam™ or metallic felt) is placed between the foam and the metal can. Packing/insulation material can be a woven cloth (such as Siltemp, Nextel, or other oxide fiber insulation) castable or preformed fibrous insulation (such as Kaowool, Min-K, Q-felt, zirconia felt, etc.) Interam™, etch, or a metallic felt. The insulation serves to insulate the ceramic foam support/baffle from the metal can, reducing can temperature, and reduces the mechanical shock loading of the support/baffle material by acting as a compliant layer between the can and support.

BRIEF DESCRIPTION OF THE DRAWINGS:

Figure 1 is a flow chart illustrating the method of forming the foam support material of the present invention;

Figure 2 is a cut away view of a first embodiment of the foam material of the present invention incorporated into an engine muffler/exhaust system;

Figure 3 is a cut away view of a second embodiment of a muffler/exhaust system;

Figure 4 is a side cut away view of the second embodiment;

Figure 5 is a cutaway view of a third embodiment of a muffler/exhaust system;

Figure 6 is a side cutaway view of the third embodiment of Figure 5;

Figure 7 is a cut away view of a fourth embodiment of a muffler/exhaust system; and

Figure 8 is a cutaway of a fifth embodiment of a muffler/exhaust system.

DETAILED DESCRIPTION OF THE INVENTION

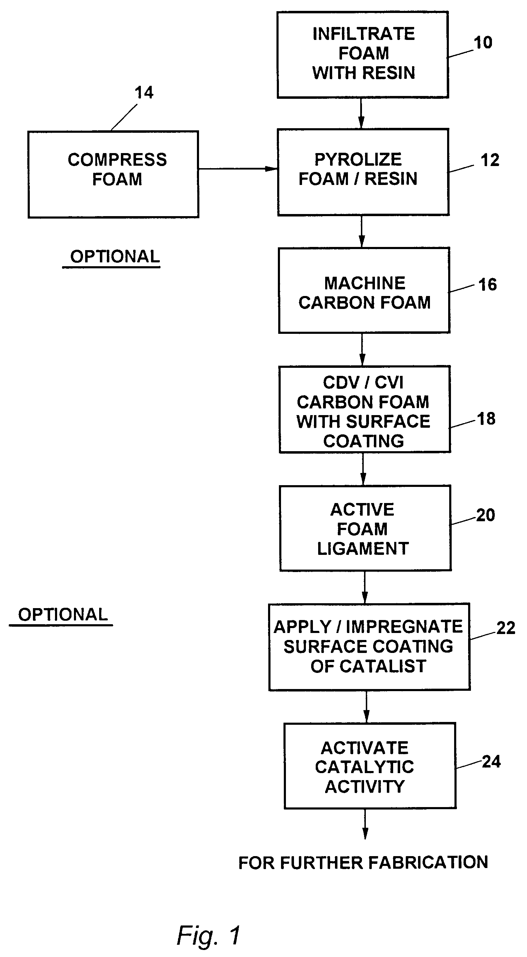

The foam catalyst support/acoustic baffle material of the present invention is fabricated through the following method as demonstrated by the flow chart shown in Figure 1. The initial raw material that is used is a 10-100 PPI polyurethane foam. As shown in Figure 1, this polyurethane foam material is infiltrated with a resin as illustrated by step 10. In the second step 12 of the method, the resin infiltrated foam is pyrolized at a temperature between 600-1200C to convert the foam/resin material to carbon. The resulting structure is an open cell porous carbon foam which forms the skeleton for further processing into the resultant catalyst support/acoustic baffle material of the present invention.

As an optional step 14, at the same time the foam/resin is being pyrolized, the foam/resin may be compressed along 1, 2 or 3 directions to form a 150-1000 ppi carbon foam. After the carbon foam skeleton is formed in step 12, the carbon foam may be machined as illustrated in step 16 to conform to the final catalyst support/sound baffle dimensions and with the understanding that there will be further dimensional changes during later coating steps described in Figure 1.

In step 18, the carbon foam undergoes either carbon vapor deposition or carbon vapor infiltration to coat carbon foam skeleton with a further surface coating. This surface coating may be a metal or other materials such as SiC, Si3n4 or MoSi2. The desired thickness for the coating will be governed by strength, heat capacity, etc. requirements of the material. As an example, typical final useful density is from 5-35% metal or ceramic which leaves between 65-95% open porosity for the support material.

At this time, an optional step may be provided as illustrated in step 20 and with this optional step being the activation of the foam ligament surface through the application of a porous or dendritic coating, diffusion barrier, or oxide coating. The porous or dendritic coating may be provided by carbon vapor deposition or carbon vapor infiltration. The oxide coating may be provided by various methods such as solgel, CVI, oxidation, or standard washcoat application.

After the activation step 20, or if this step is not used then after the surface coating step 18, an application or impregnation of the foam support with a further surface coating of a catalyst material is illustrated in step 22. Specifically, a surface coating of a precious metal catalyst is provided by such methods such as organometallic CVD, aqueous plating, or fused salt electrolysis. The foam material is now ready for the final step 24 which is the activation of the catalytic surface coating by applying heat such as 900/1000C in a hydrogen (H2) environment.

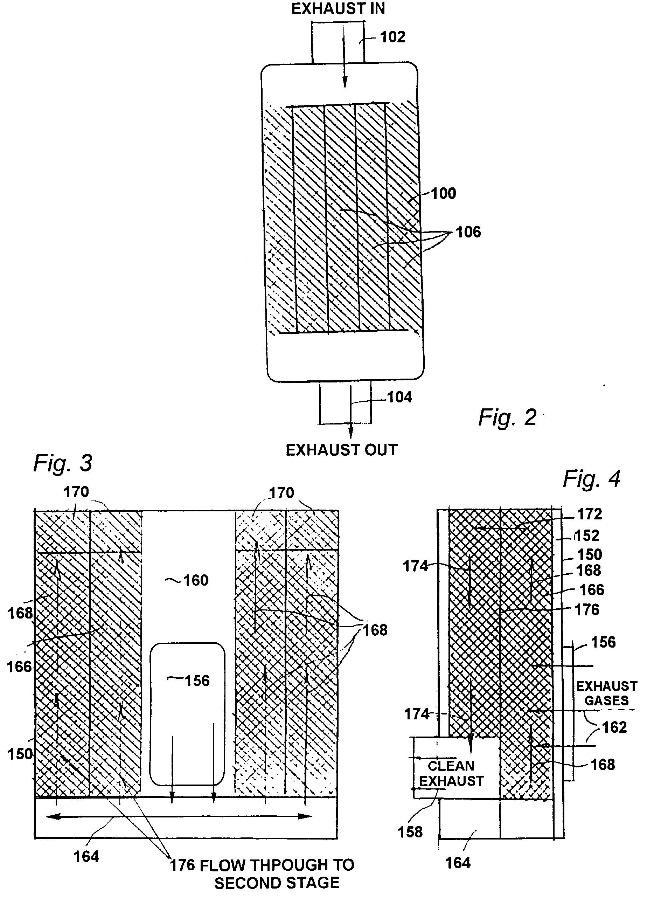

The foam catalyst/baffle structure produced by the method of Figure 1 forms the basis for the small engine muffler/exhaust system, a number of embodiments of which are shown in Figures 2-8. Using two porous foam baffles separated by a proper distance to provide a certain amount of acoustic resonance can double the sound suppression level obtained. Also, the foam geometry can be modified to a conical shape or include conical shape impressions to provide for the same sound suppression levels but with a reduced back pressure.

Other modifications may be the use of gas directors located within the foam to control the exhaust gas path and to increase the exhaust gas residence time. Typically, a fibrous insulation material would be placed between the foam and an outside metal can and this material can be a woven cloth or castable fibrous insulation. All of the embodiments shown in Figures 2-8 could include the above insulation and packing material, although this material is not shown in all of the cut away views of Figures 2-8.

As shown in Figure 2, an outer can 100 has an input port 102 to receive the exhaust gas from the motor and an output port 104 to exhaust the now substantially contaminant-free exhaust. As shown in Figure 2, a plurality of concentric cylinders 106 may be placed within the can 100 and with the input exhaust having to pass through the concentric cylinders. It can be seen that the pathway for the input exhaust is straight through and although the can is shown to be filled with the plurality of concentric cylinders, it is to be appreciated that the foam supported catalyst material may merely be a single mass of such material. In the case of a lind muffler for sound reduction, the foam only needs to be placed in the first ring (201) for maximum performance.

Figures 3 and 4 show a second embodiment of the catalyzed foam of the present invention incorporated into an engine muffler/exhaust system including an outer can 150. As shown in Figure 4, insulation and packing material 152 may surround the foam material. In addition, an input port 156 is supplied for exhaust gases and an output port 158 passes the clean exhaust out to the atmosphere. The pathway for the exhaust gases through the muffler/exhaust system is shown by arrows in Figures 3 and 4. The exhaust gases pass through the input port 156 into a central area 160 and as shown by arrows 162 pass into an area 164. The exhaust then passes through the catalyzed foam 166 which has been formed into a series of cylindrical members forming first and second stages within the can 150. Figures 3 & 4 illustrate the geometric flexibility at the gas path made possible by the foam support.

As shown in Figure 3, the exhaust gas is passed through the catalyzed foam 166 as shown by arrows 168 to a flow through area 170 at the end of the individual cylindrical sections of foam material 166. Note that in Figure 4 arrow 172 shows the flow through from the first group or stage of catalyzed foam material into the second group or stage of catalyzed foam material and with the arrow 174 showing the flow through the second stage out to the exhaust port 158. The various flow stages and the divisions between the stages of foam material is provided by flow dividers 176 shown in Figures 3 and 4.

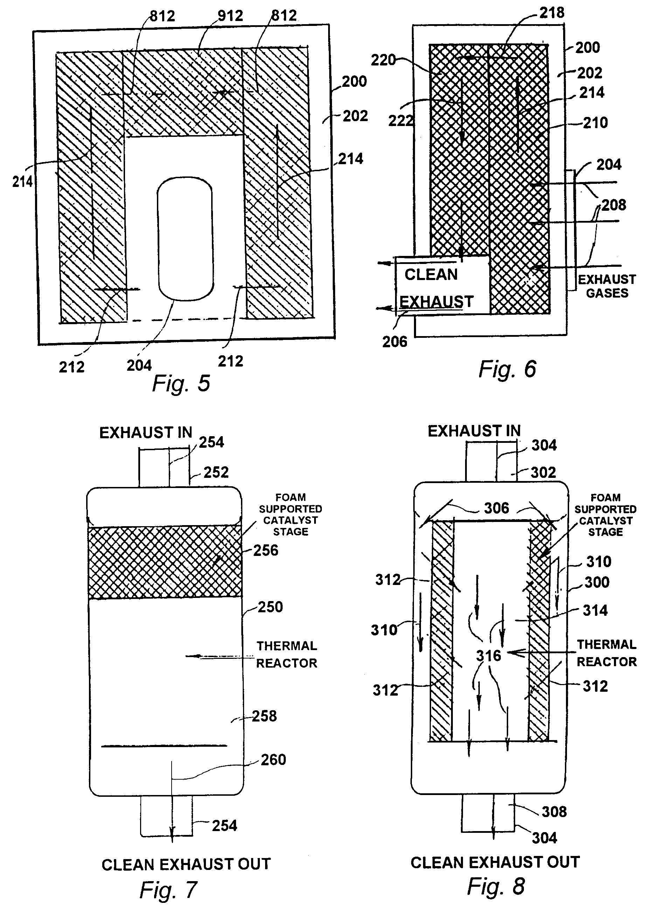

Figures 5 and 6 illustrate a similar muffler/baffle design including an outer can 200 and insulation packing material 202. In addition, input port 204 receives the exhaust gases and port 206 provides the exit for the clean exhaust. The embodiment of Figures 5 and 6 has some similarity to that shown in Figures 3 and 4 but with a somewhat different arrangement. In the embodiment of Figures 5 and 6, the exhaust gases enter the port 204 as shown by arrows 208 and pass through a first stage of catalytic foam 210. The exhaust gases enter the foam as shown by arrows 212 and then proceed in a direction shown by arrows 214 to enter a intermediate section of foam material 216. This is shown by arrows 218. The gases then continue down the second stage of catalytic foam material 220, as shown by arrows 222, to ultimately exit port 206 as clean exhaust.

Figure 7 illustrates yet another embodiment of a muffler/exhaust system using the catalyzed foam of the present invention. In the embodiment of Figure 7, an outer can 250 includes an input port 252 and an exit port 254. Exhaust gases enter the input port 252 as shown by arrow 254 to an interior position within the outer can where catalytic foam material 256 is supported. After the gases pass through the catalytic foam material 256, the gases enter a second portion of the muffler/exhaust structure which forms a thermal reactor 258. After the gases exit the thermal reactor, the clean exhaust now exits the port 254 as shown by arrow 260.

The embodiment of Figure 7 forms a two-stage catathermal converter. The first stage, which is the catalytic foam material, raises the temperature to increase reaction rates sufficiently for the second stage, which is the thermal reactor, to complete oxidation of hydrocarbons and carbonmonoxide.

Figure 8 illustrates another embodiment of a catathermal converter design using the foam supported flow through catalyst foam. The embodiment of Figure 8 provides for concentric flow-through to reduce the thermal and attachment problems that could result from the design of Figure 7. The embodiment of Figure 8 produces a minimum flow rate and pressure drop through the catalyst foam material and with the foam catalyst material also insulating the thermal stage from the muffler can. This reduces the amount of catalyst foam required as well as the amount of surface cooling/insulation material necessary.

In the embodiment of Figure 8, an outer can 300 includes an input port 302 and an exit 304. The input exhaust gases, represented by arrow 304, enter the input port and are diverted in a path as shown by arrows 306 to pass in an area between the can 300 and a concentric tube of catalytic foam material 308. As can be seen in Figure 8, and as shown by the arrows 310 and 312, the exhaust gases pass downward in the space between the can and the catalytic foam and through the foam into an interior position which forms a thermal reactor 314. The gases are then passed down through the thermal reactor, as shown by arrows 316, to ultimately exit the muffler/baffle exit port 304 as clean exhaust gases represented by arrow 318.

Although this invention has been disclosed and illustrated with reference to particular embodiments, the principles involved are susceptible for use in numerous other embodiments which will be apparent to persons skilled in the art and various adaptations and modifications may be made. The invention is, therefore, only to be limited as indicated by the scope of the appended claims.

## Claims

1. An acoustic baffle/catalyst support material including
an open cell carbon foam skeleton,
a surface coating on the carbon foam skeleton having a relative density of 5-35%, and wherein the surface coating is formed by one or more of the following group of materials SiC, $Si_3N_4$, $MoSi_2$ or high temperature metal.

2. The material of claim 1 additionally including a dendritic coating on the surface coating.

3. The material of claim 1 additionally including a porous surface structure deposited on the surface coating.

4. The material of claim 1 additionally including an oxide surface layer applied to the surface coating.

5. The material of claim 1 including a diffusion barrier applied to the carbon foam skeleton.

6. The material of claim 1 additionally including a catalytic layer applied to surface coating and wherein such catalytic layer is formed from a platinum group metal or metals.

7. The material of claim 6 wherein the catalyst layer is formed as a thin contiguous coating.

8. The material of claim 1 additionally including an outer can having an input and output port and a pathway between the input and output port and wherein the material is positioned within the pathway to form an engine muffler/exhaust system.

9. The material of claim 8 wherein the material is formed as a cylindrical section within the pathway in the outer can.

10. The material of claim 9 wherein the material is formed as multiple cylindrical sections positioned within the pathway in the outer can to provide additional sound absorption.

11. The material of claim 8 wherein a plurality of sections of material are included within the outer can and with additional flow dividers located within the can and between individual sections of material to provide for folded pathway within the outer can through the multiple sections of material from the input to the output port.

12. The material of claim 8 additionally including a thermal reactor and with the thermal reactor located at a position within the can to have input gases first flow through the catalytic coated foam material before entering the thermal reactor for exit through the exit port.

13. The material of claim 8 when a compliant packing material is used between the container and support/baffle material.

14. The material of claim 8 when an insulator is used surrounding the baffle/support.

15. The material of claim 13 or 14 when a dense, non-abrading interlayer is placed between the insulator/compliant layer and the support/baffle material.

16. A method of producing an acoustic baffle/catalyst foam support material including the following steps:
providing a polyurethane open cell foam material having a density between 10-100ppi,
providing a resin material,
infiltrating the polyurethane foam with the resin material to produce an impregnated foam,
pyrolizing the impregnated foam to form a carbon skeleton forming a carbon foam, and
coating the carbon foam skeleton with one or more of the following group of materials to a relative density of 5-35%, the group of materials being SiC, $Si_3N_4$, $MoSi_2$ or high temperature metal.

17. The method of claim 16 wherein the step of coating the carbon foam skeleton is provided using either chemical vapor deposition or chemical vapor infiltration.

18. The method of claim 16 including the additional step of geometrically compressing the infiltrated foam in one, two or three dimensions to form foam having a density between 150-1000ppi.

19. The method of claim 16 including the additional step of activating the coated carbon foam skeleton for enhancement of the surface coating.

20. The method of claim 19 wherein the step of activation is provided by a chemical vapor deposition of a dendritic surface coating.

21. The method of claim 19 wherein the step of activation is provided by a deposition of a porous surface structure.

22. The method of claim 19 wherein the step of activation is provided by an application of an oxide surface layer.

23. The method of claim 22 where the application of the oxide surface layer is provided by chemical vapor deposition.

24. The method of claim 22 wherein the application of the oxide surface layer is applied by thermal oxidation.

25. The method of claim 16 including the additional step of applying a catalyst to the coated carbon foam skeleton and wherein such catalyst is a metal or metals from the platinum group.

26. The method of claim 25 wherein the step of applying the catalyst is provided by using carbon vapor deposition or carbon vapor infiltration from an organometallic compound.

27. The method of claim 25 wherein the step of applying the catalyst is provided using solution chemistry.

28. The method of claim 25 wherein the step of applying the catalyst is provided using fused salt electrolysis.

29. The method of claim 25 wherein the step of providing the catalyst is provided as a thin contiguous coating.

30. The method of claim 25 including an additional step of activating the catalyst material.

31. The method of claim 30 wherein the step of activating catalyst material is provided by the treatment of the coated foam material at 900-1000$^{\circ}$C in $H_2$.

*Fig. 1*

EXHAUST IN

—102

—100

—106

—104

*Fig. 2*

EXHAUST OUT

*Fig. 3*

*Fig. 4*

170          170          172
             152
             150
174          168
             166
             176

168                       156

168
160

166                EXHAUST
                   GASES
156                —162

174                168

150          CLEAN
             EXHAUST

158

164          164

176 FLOW THPOUGH TO
SECOND STAGE

*Fig. 5*

*Fig. 6*

*Fig. 7*

*Fig. 8*

European Patent
Office

**EUROPEAN SEARCH REPORT**

Application Number

EP 95 10 8742

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | WO-A-94 27842 (ULTRAMET)<br>* page 5, line 10 - page 12, line 14 *<br>--- | 1,16,17 | B01J35/04<br>B01D53/94 |
| A | EP-A-0 624 560 (PECHINEY RECHERCHE)<br><br>* page 3, line 20 - page 5, line 54 *<br>* claims *<br>--- | 1,6,7,<br>16,25,29 | |
| A | FR-A-2 650 628 (ARIS S.A.)<br>* the whole document *<br>--- | 8-15 | |
| A | US-A-4 832 881 (THE UNITED STATES OF AMERICA )<br>----- | | |
| | | | **TECHNICAL FIELDS SEARCHED (Int.Cl.6)**<br><br>B01J<br>B01D<br>F01N |

The present search report has been drawn up for all claims

| Place of search | Date of completion of the search | Examiner |
|---|---|---|
| THE HAGUE | 17 November 1995 | Bogaerts, M |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
...........................................................................................
& : member of the same patent family, corresponding
   document

EPO FORM 1503 03.82 (P04C01)